(19) Europäisches Patentamt
European Patent Office
Office européen des brevets

(11) **EP 2 002 726 A2**

(12) **EUROPEAN PATENT APPLICATION**
published in accordance with Art. 153(4) EPC

(43) Date of publication:
**17.12.2008 Bulletin 2008/51**

(51) Int Cl.:
*A23C 9/152* (2006.01)    *A23L 1/30* (2006.01)
*A23L 2/38* (2006.01)    *A23L 2/52* (2006.01)

(21) Application number: **06714334.7**

(22) Date of filing: **22.02.2006**

(86) International application number:
**PCT/JP2006/303194**

(87) International publication number:
**WO 2007/096962 (30.08.2007 Gazette 2007/35)**

(84) Designated Contracting States:
**AT BE BG CH CY CZ DE DK EE ES FI FR GB GR HU IE IS IT LI LT LU LV MC NL PL PT RO SE SI SK TR**

(71) Applicant: **SAN-EI GEN F.F.I., INC.**
**Toyonaka-shi,**
**Osaka 561-8588 (JP)**

(72) Inventors:
• **KONDA, Takashi**
**Toyonaka-shi, Osaka 561-8588 (JP)**

• **ORIKOSHI, Hideyuki**
**Toyonaka-shi, Osaka 561-8588 (JP)**
• **SASAKI, Yasushi**
**Toyonaka-shi, Osaka 561-8588 (JP)**
• **OKUDA, Takahide**
**Toyonaka-shi, Osaka 561-8588 (JP)**

(74) Representative: **Müller-Boré & Partner**
**Patentanwälte**
**Grafinger Strasse 2**
**81671 München (DE)**

(54) **PLANT STEROL-CONTAINING MILK BEVERAGE AND PROCESS FOR PRODUCTION THEREOF**

(57)    The present invention provides a plant sterol-containing milk beverage with excellent quality retention and stability, in which the plant sterol remains emulsified stably during long-term storage. The plant sterol-containing milk beverage contains a plant sterol, a milk ingredient, and at least one emulsifier selected from (a) an organic acid monoglyceride and sodium caseinate, and (b) microcrystalline cellulose. The milk beverage may further contain at least one member selected from the group consisting of sucrose fatty acid esters, xanthan gum, native gellan gum, and carageenan.

EP 2 002 726 A2

**Description**

TECHNICAL FIELD

The present invention relates to a plant sterol-containing milk beverage. Specifically, the present invention relates to a plant sterol-containing milk beverage with excellent quality retention and stability in which the plant sterol remains stably emulsified during storage for a long period. The present invention further relates to a method for producing such a plant sterol-containing milk beverage, and a method for emulsifying and stabilizing a plant sterol-containing milk beverage.

BACKGROUND ART

Recently, in Japan, it has been said that the westernization and diversification of dietary habits and changes in lifestyle lead to an excessive intake of cholesterol. An excessive intake of cholesterol contained in food increases blood cholesterol, and thus is a factor in the onset of cardiovascular diseases such as hyperlipidemia, arteriosclerosis, arrhythmia, myocardial infarction, etc., which currently tend to be increasing. Attention has therefore been given to plant sterols as substances that can inhibit the absorption of cholesterol into the body and reduce serum cholesterol levels. However, plant sterols have the disadvantage of poor solubility in both water and oil, and therefore are not easily applicable to foods. Studies have been made on methods for emulsifying plant sterols in water or oil for application in food.

Known methods for dispersing plant sterols in aqueous dispersions or suspensions include a method in which a high melting point lipid, such as a plant sterol, melted at 150°C is mixed with a non-sterol emulsifier such as a monoglyceride at a ratio of non-sterol emulsifier to high melting point lipid of less than 1/2 (weight ratio) (Patent Document 1); a method in which a plant sterol and an emulsifier are mixed together, melted by heating at 60°C to 200°C, and mixed with a water-based beverage or an emulsifier-containing water-based beverage, and the resulting water-based beverage is stirred at high speed to disperse the plant sterol in the water-based beverage (Patent Document 2); and the like.

Patent Document 3 discloses a method for producing a beverage with excellent storage stability, in which a plant sterol-containing water-soluble composition is added to a beverage, the composition comprising (A) a plant sterol, (B) one or more lipophilic emulsifiers selected from the group consisting of glycerol fatty acid esters, organic acid monoglycerides, polyglycerol fatty acid esters, propylene glycol fatty acid esters, polyglycerol condensed ricinoleic acid esters, sorbitan fatty acid esters, sucrose fatty acid esters, and lecithin, (C) an edible oil, (D) at least one hydrophilic polyglycerol fatty acid ester, and (E) water, in which the HLB value of the emulsifier in the entire system is 12 or higher. Patent Document 4 discloses preparation of skim yogurt by adding β-sitosterol and xanthan gum to a stable and uniform suspension obtained by adding a thickener to a hydrophobic substance and/or a substance with a melting point higher than about 130°C in an aqueous medium.

However, these methods cannot readily disperse plant sterols stably in milk beverages such as coffee with milk, tea with milk, etc., and have problems with the coagulation, precipitation, etc. of oil and fat, caused by heat sterilization treatments such as UHT sterilization and retort sterilization, and long-term storage.

Patent Document 1: Japanese Unexamined Patent Publication No. 1999-146757
Patent Document 2: Japanese Unexamined Patent Publication No. 2002-112747
Patent Document 3: Japanese Unexamined Patent Publication No. 2002-291442
Patent Document 4: Japanese Unexamined Patent Publication No. 2002-505093

DISCLOSURE OF THE INVENTION

PROBLEMS TO BE SOLVED BY THE INVENTION

The present invention was made in light of the above circumstances. An object of the present invention is to provide a milk beverage containing a stably emulsified plant sterol, and a production method therefor. More specifically, an object of the present invention is to provide a milk beverage with excellent quality retention and stability that contains a stably emulsified plant sterol and in which coagulation and precipitation are significantly suppressed even when the beverage is subjected to long-term storage and heat sterilization; and a production method therefor.

Another object of the present invention is to provide a method for emulsifying and stabilizing a plant sterol-containing milk beverage, and in particular a method for emulsifying and stabilizing a plant sterol-containing milk beverage without causing problems such as coagulation and precipitation even when the beverage is subjected to long-term storage and heat sterilization.

MEANS FOR SOLVING THE PROBLEMS

The present inventors conducted extensive research in view of the above problems of the prior art, and found that the above objects can be achieved and a plant sterol can be kept emulsified stably in a milk beverage for a long period, by adding to the raw materials of a milk beverage (a) a combination of an organic acid monoglyceride and sodium caseinate, or (b) microcrystalline cellulose, as an emulsifier.

The present inventors also found that the combined use of the above emulsifier and a sucrose fatty acid ester can more remarkably suppress coagulation and precipitation during heat sterilization; and that the combined use of the above emulsifier and one or more members selected from xanthan gum, native gellan gum, and carageenan further improves the long-term emulsification stability of the plant sterol in the milk beverage. The present invention was thus accomplished.

The present invention relates to the following embodiments of a plant sterol-containing milk beverage.

(1) Plant Sterol-Containing Milk Beverage

(1-1) A milk beverage comprising a plant sterol, a milk ingredient, and at least one of (a) and (b):

(a) an organic acid monoglyceride and sodium caseinate, and
(b) microcrystalline cellulose.

(1-2) The milk beverage according to (1-1), wherein the plant sterol is one or more members selected from the group consisting of β-sitosterol, campesterol, stigmasterol, brassicasterol, sitostanol, campestanol, and ester salts thereof.

(1-3) The milk beverage according to (1-1) or (1-2), wherein the organic acid monoglyceride is one or more members selected from the group consisting of succinic acid monoglyceride, citric acid monoglyceride, diacetyl tartaric acid monoglyceride, acetic acid monoglyceride, and lactic acid monoglyceride.

(1-4) The milk beverage according to any one of (1-1) to (1-3), which further comprises a sucrose fatty acid ester.

(1-5) The milk beverage according to any one of (1-1) to (1-4), which further comprises at least one polysaccharide thickener selected from the group consisting of xanthan gum, native gellan gum, and carageenan.

(1-6) The milk beverage according to (1-1), wherein the milk ingredient is contained in a proportion of 0.8 to 5 wt. % on a nonfat milk solids basis.

(2) Method for Producing Plant Sterol-Containing Milk Beverage

(2-1) A method for producing a milk beverage, comprising the steps of homogenizing and heat-sterilizing milk beverage raw materials including a plant sterol and a milk ingredient in the presence of at least one of the following emulsifiers (a) and (b) :

(a) an organic acid monoglyceride and sodium caseinate, and
(b) microcrystalline cellulose.

(2-2) The method according to (2-1), wherein the plant sterol is one or more members selected from the group consisting of β-sitosterol, campesterol, stigmasterol, brassicasterol, sitostanol, campestanol, and ester salts thereof.

(2-3) The method according to (2-1) or (2-2), wherein the organic acid monoglyceride is one or more members selected from the group consisting of succinic acid monoglyceride, citric acid monoglyceride, diacetyl tartaric acid monoglyceride, acetic acid monoglyceride, and lactic acid monoglyceride.

(2-4) The method according to any one of (2-1) to (2-3), wherein the homogenization and heat sterilization are performed in the presence of a sucrose fatty acid ester in addition to the emulsifier.

(2-5) The method according to any one of (2-1) to (2-4), wherein the homogenization and heat sterilization are performed in the presence of at least one member selected from the group consisting of xanthan gum, native gellan gum, and carageenan.

(2-6) The method according to any one of (2-1) to (2-5), wherein the proportion of the milk ingredient in the milk beverage raw materials is 0.8 to 5 wt.% on a nonfat milk solids basis.

(3) Method for Emulsifying and Stabilizing Plant Sterol-Containing Milk Beverage

(3-1) A method for emulsifying and stabilizing a plant sterol-containing milk beverage, comprising the steps of homogenizing and heat-sterilizing milk beverage raw materials including a plant sterol and a milk ingredient in the presence of at least one of the following emulsifiers (a) and (b):

(a) an organic acid monoglyceride and sodium caseinate, and
(b) microcrystalline cellulose.

(3-2) The method according to (3-1), wherein the plant sterol is one or more members selected from the group consisting of β-sitosterol, campesterol, stigmasterol, brassicasterol, sitostanol, campestanol, and ester salts thereof.

(3-3) The method according to (3-1) or (3-2), wherein the organic acid monoglyceride is one or more members selected from the group consisting of succinic acid monoglyceride, citric acid monoglyceride, diacetyl tartaric acid monoglyceride, acetic acid monoglyceride, and lactic acid monoglyceride.

(3-4) The method according to any one of (3-1) to (3-3), wherein the homogenization and heat sterilization are performed in the presence of a sucrose fatty acid ester in addition to the emulsifier.

(3-5) The method according to any one of (3-1) to (3-4), wherein the homogenization and heat sterilization are performed in the presence of at least one polysaccharide thickener selected from the group consisting of xanthan gum, native gellan gum, and carageenan, in addition to the emulsifier.

(3-6) The method according to any one of (3-1) to (3-5), wherein the proportion of the milk ingredient in the milk beverage raw materials is 0.8 to 5 wt.% on a nonfat milk solids basis.

(4) Method for Emulsifying and Stabilizing Plant Sterol

(4-1) Use of at least one of the following emulsifiers (a) and (b) in production of an emulsified and stabilized milk beverage comprising a plant sterol and a milk ingredient:

(a) an organic acid monoglyceride and sodium caseinate, and
(b) microcrystalline cellulose.

(4-2) Use of at least one of the following emulsifiers (a) and (b) for emulsifying and stabilizing a milk beverage comprising a plant sterol and a milk ingredient:

(a) an organic acid monoglyceride and sodium caseinate, and
(b) microcrystalline cellulose.

EFFECTS OF THE INVENTION

The present invention makes it possible to stably mix and emulsify a plant sterol in a milk beverage and significantly suppress coagulation and precipitation of oil and fat during heat sterilization and long-term storage, thereby providing a milk beverage in which a plant sterol remains stably emulsified for a long period.

BEST MODE FOR CARRYING OUT THE INVENTION

The milk beverage of the present invention comprises a plant sterol, a milk ingredient, and at least one emulsifier selected from (a) a combination of an organic acid monoglyceride and sodium caseinate and (b) microcrystalline cellulose, so that the plant sterol and milk ingredient remain emulsified stably in water for a long period. According to the present invention, a milk beverage containing a plant sterol and a milk ingredient can be kept emulsified stably for a long time, when the milk beverage comprises at least one emulsifier selected from (a) a combination of an organic acid monoglyceride and sodium caseinate and (b) microcrystalline cellulose.

As used herein, "milk beverage" means a neutral or weakly acidic milk beverage containing a milk ingredient. The beverage preferably has a pH of 5.5 to 8. "Milk ingredient" indicates raw milk, cow's milk, special cow's milk, or an ingredient produced using any of these milks as a raw material. Specific examples of milk ingredients include raw milk, cow's milk, special cow's milk, raw cream, powdered whole milk, powdered skim milk, condensed whole milk, and condensed skim milk, etc. The milk ingredient content in the milk beverage is not limited, but is usually 0.8 wt.% or greater, preferably 0.8 to 5 wt.%, and more preferably 0.8 to 3 wt.%, on a nonfat milk solids basis. Examples of such milk beverages include, but are not limited to, coffee-milk beverages, café au lait, tea with milk, cocoa with milk, milkshakes, soups, fruit-milk beverages, egg-milk beverages, powdered green tea-containing milk beverages, and soy milk-containing milk beverages, etc.

The plant sterol used in the present invention is a plant sterol extracted from an oil or fat derived from vegetables such as soybeans, rapeseeds, or cottonseeds and purified if necessary. Specific examples include plant sterols containing as main components one or more members selected from β-sitosterol, campesterol, stigmasterol, brassicasterol, sitostanol, campestanol, and ester salts thereof. Preferable examples include plant sterols containing as main components one or more members selected from β-sitosterol, campesterol, stigmasterol, and ester salts thereof.

The form of the plant sterol added to the milk beverage is not limited, and may be, for example, a solid such as a powder, or a liquid such as a solution or dispersion in water, an alcohol, or like solvent. Preferably, the plant sterol is processed into a readily water-soluble form. Known methods can be used without limitation for processing the plant sterol into a readily water-soluble form. Examples of usable methods include, but are not limited to, a method in which the plant sterol is mixed and kneaded with dextrin and a lipophilic emulsifier such as a glycerol fatty acid ester, polysorbate, or the like, and then the resulting mixture is subjected to sieve classification, fluidized bed granulation, and spray drying to obtain a powder (see, for example, Japanese Unexamined Patent Publication No. 2005-269941); a method in which the plant sterol is heated and melted at a temperature not lower than the melting point, and then mixed with a liquid containing water, a polyhydric alcohol, and an emulsifier such as gum arabic, a sucrose fatty acid ester, a glycerol fatty acid ester, or the like, and the resulting mixture is emulsified or solubilized; a method in which the plant sterol is mixed with the above-mentioned emulsifier, the resulting mixture is heated and melted at a temperature not lower than the melting point, and then water and a polyhydric alcohol are added for emulsification or solubilization; a method in which the plant sterol, the above-mentioned emulsifier, water, and a polyhydric alcohol are mixed together, and the resulting mixture is heated and melted at a temperature not lower than the melting point, followed by emulsification or solubilization (see, for example, Japanese Patent No. 3535147); etc.

When the plant sterol is formed into a powder, the emulsifier described hereinafter ((a) an organic acid monoglyceride and sodium caseinate or (b) microcrystalline cellulose) can also be added.

Plant sterols processed into readily water-soluble forms are commercially available, and include, for example, the San Sterol (trademark) series (San Sterol (trademark) No. 1) produced by San-Ei Gen F.F.I., Inc.

The plant sterol content in the milk beverage is usually 0.1 to 5 wt.%, preferably 0.2 to 3 wt.%, and more preferably 0.4 to 2 wt%.

Organic acid monoglycerides that can be used in the present invention include, but are not limited to, succinic acid monoglyceride, citric acid monoglyceride, diacetyl tartaric acid monoglyceride, acetic acid monoglyceride, and lactic acid monoglyceride. They can be used singly or in any combination of two or more. A preferable organic acid monoglyceride is succinic acid monoglyceride.

The organic acid monoglyceride content in the milk beverage varies depending on the concentration of the plant sterol used, the type of milk beverage, product distribution conditions, etc., but is usually 0.005 to 0.5 wt.%, preferably 0.01 to 0.2 wt.%, and more preferably 0.02 to 0.05 wt.%. Addition of more than 0.5 wt.% of organic acid monoglyceride does not impair the effect of the present invention, i.e., emulsification stability, but makes the characteristic smell and taste of organic acid monoglycerides pronounced and may affect the taste and flavor of the final milk beverage.

In the present invention, a wide range of sodium caseinate generally used as emulsifiers and stabilizers for beverages can be used. The sodium caseinate content in the milk beverage varies depending on the concentration of the plant sterol used, the type of milk beverage, product distribution conditions, etc., but is usually 0.01 to 1 wt.%, preferably 0.015 to 0.7 wt.%, and more preferably 0.05 to 0.3 wt.%. Addition of more than 1 wt.% of sodium caseinate does not impair the effect of the present invention, i.e., emulsification stability, but makes the characteristic smell and taste of sodium caseinate pronounced and may affect the taste and flavor of the final milk beverage.

Such organic acid monoglycerides and sodium caseinate are commercially available.

In the present invention, a wide range of microcrystalline cellulose generally used as emulsifiers and stabilizers for foods and beverages can be used. Microcrystalline cellulose by itself can be used, but a microcrystalline cellulose composite containing a specific proportion of a dispersant or disintegrator can be preferably used. Examples of the dispersant or disintegrator include carboxymethylcellulose sodium, galactomannan (guar gum, enzymatically hydrolyzed guar gum, locust bean gum, tara gum, etc.), polydextrose, non-digestible dextrin, gum arabic, arabinogalactan, alginic acid and salts thereof, curdlan, ghatti gum, carageenan, karaya gum, agar, xanthan gum, psyllium seed gum, tamarind seed gum, gellan gum, gelatin, tragacanth gum, furcellaran, pullulan, pectin, etc. Of these, preferable examples include sodium carboxymethylcellulose, carageenan, karaya gum, xanthan gum, gellan gum, non-digestible dextrin, and pectin.

Such a microcrystalline cellulose composite can be produced by the methods disclosed in Japanese Examined Patent Publications No. 1965-14174 and No. 1987-43661, Japanese Unexamined Patent Publication No. 1994-335365, etc. Specific examples of usable methods include a method in which finely divided cellulose obtained by grinding pulp is uniformly mixed with the aforementioned dispersant or disintegrator to make a homogeneous slurry, which is then dried.

The size of microcrystalline cellulose crystal particles is not limited, but the average particle size is usually 20 $\mu$m or less, preferably 10 $\mu$m or less, and more preferably 5 $\mu$m or less.

Such microcrystalline cellulose is commercially available. Examples include the Abicell (trademark) series or the Ceolas (trademark) series produced by Asahi Kasei Corporation; and Homogen (trademark) No. 1610 and Homogen (trademark) No. 1855 produced by San-Ei Gen F. F. I., Inc.; etc.

The microcrystalline cellulose content in the milk beverage varies depending on the concentration of the plant sterol used, the type of milk beverage, product distribution conditions, etc., but is usually 0.01 to 2 wt.%, preferably 0.05 to 1.5 wt.%, and more preferably 0.1 to 1 wt.%. Addition of more than 2 wt.% of microcrystalline cellulose does not impair the effect of the present invention, i.e., emulsification stability, but makes the characteristic smell and taste of microcrystalline cellulose pronounced and may affect the taste and flavor of the final milk beverage.

The plant sterol-containing milk beverage of the present invention is characterized by containing as the emulsifier a combination of an organic acid monoglyceride and sodium caseinate, or microcrystalline cellulose. The milk beverage of the present invention is not limited as long as it has the above characteristic, and as other embodiments, the milk beverage of the present invention may contain a combination of three emulsifiers: an organic acid monoglyceride, sodium caseinate, and microcrystalline cellulose; or two emulsifiers: an organic acid monoglyceride and microcrystalline cellulose; or two emulsifiers: sodium caseinate and microcrystalline cellulose.

In particular, when using β-sitosterol, campesterol, stigmasterol, brassicasterol, sitostanol, or campestanol as a plant sterol, it is preferable to use a combination of an organic acid monoglyceride and sodium caseinate, or a combination of an organic acid monoglyceride, sodium caseinate, and microcrystalline cellulose.

When using an ester salt of β-sitosterol, campesterol, stigmasterol, brassicasterol, sitostanol, or campestanol as a plant sterol, it is preferable to use microcrystalline cellulose alone, or a combination of an organic acid monoglyceride, sodium caseinate, and microcrystalline cellulose.

The milk beverage of the present invention may contain a sucrose fatty acid ester in addition to the emulsifier. This embodiment is preferable when the milk beverage is distributed at room temperature or stored at a high temperature in a hot vending machine. Usable sucrose fatty acid esters are not limited, but those having an HLB of usually 13 or greater, preferably 13 to 18, and more preferably 14 to 16, and having 16 to 22 carbon atoms in the constituent saturated fatty acid can be advantageously used. Specific examples of saturated fatty acids having 16 to 22 carbon atoms include palmitic acid, stearic acid, arachidonic acid, behenic acid, lignoceric acid, etc. These may be used singly or as a mixture of two or more. Of these constituent fatty acids, palmitic acid and stearic acid are particularly preferable.

The sucrose fatty acid ester content in the milk beverage varies depending on the concentration of the plant sterol used, the type of milk beverage, product distribution conditions, etc., and may be usually 0.005 to 1 wt.%, preferably 0.02 to 0.7 wt.%, and more preferably 0.03 to 0.5 wt.%. Addition of more than 1 wt.% of sucrose fatty acid ester does not impair the effect of the present invention, but makes the characteristic smell and taste of sucrose fatty acid esters pronounced and may affect the taste and flavor of the final milk beverage.

The milk beverage of the present invention may contain one or more polysaccharide thickeners selected from xanthan gum native gellan gum, and carageenan, in addition to the above emulsifier, or in addition to the emulsifier and a sucrose fatty acid ester that is optionally used. Addition of such polysaccharide thickeners makes it possible to further improve the effect of preventing coagulation and precipitation of oil and fat caused by heat sterilization or long-term storage of the plant sterol-containing milk beverage. The total polysaccharide thickener content in the milk beverage is not limited, and may be 0.005 to 0.4 wt.%, preferably 0.075 to 0.2 wt.%, and more preferably 0.01 to 0.1 wt.%.

In addition to the above-mentioned plant sterol, milk ingredient, and emulsifiers (a) and/or (b), and the above-mentioned sucrose fatty acid ester and/or polysaccharide thickener used when necessary, the plant sterol-containing milk beverage of the present invention may optionally contain, saccharides, sweeteners, high intensity sweeteners, coffee, black tea, cocoa, powdered green tea, chocolate, processed eggs (egg yolk or egg white), acidifiers, seasonings, colorants, flavors, fruit juices, purees, preservatives, extracts, gums, pH adjusters, alcoholic beverages, vitamins and other minerals, etc.

Examples of saccharides include sugar, fructose, glucose, glucose syrups, hydrogenated glucose syrups, honey, high fructose corn syrups, invert sugars, oligosaccharides (e.g., isomaltooligosaccharides, reduced xylooligosaccharides, reduced gentiooligosaccharides, xylooligosaccharides, gentiooligosaccharides, nigerooligosaccharides, theandeoligosaccharides, soybean oligosaccharides, etc.), trehalose, sugar alcohols (e.g., maltitol, erythritol, sorbitol, isomalt, xylitol, lactitol, etc.), coupling sugars, and the like.

Examples of high intensity sweeteners include aspartame, acesulfame potassium, sucralose, alitame, neotame, licorice extract (glycyrrhizin), saccharine, saccharine sodium, stevia extract, stevia powder, and the like.

The milk beverage of the present invention may contain emulsifiers other than the emulsifiers (a) and (b) as long as the effect of the present invention is not impaired. Specific examples of usable emulsifiers include glycerol fatty acid esters, polyglycerol fatty acid esters, polyglycerol condensed ricinoleic acid esters, sorbitan fatty acid esters, propylene glycol fatty acid esters, stearoyl lactic acid salts (sodium salt and potassium salts), yucca extract, saponin, lecithin, polysorbate, and the like.

The milk beverage of the present invention may also contain stabilizers as long as the effect of the present invention is not impaired. Specific examples of usable stabilizers include deacylated gellan gum, agar, gelatin, pectin, starches such as tapioca starch, corn starch, etc., milk serum proteins, locust bean gum, guar gum, gum arabic, glucomannan, tara gum, pullulan, tamarind seed gum, tragacanth gum, karaya gum, alginic acid, sodium alginate, macrophomopsis gum, carboxymethylcellulose, microfibrillated cellulose, fermented cellulose, soybean polysaccharides, dextrin, etc.

(2) Method for Producing Plant Sterol-Containing Milk Beverage

The milk beverage of the present invention described above can be prepared through the steps of homogenizing and heat-sterilizing milk beverage raw materials including a plant sterol and a milk ingredient in the presence of at least one emulsifier selected from the following (a) and (b):

    (a) a combination of an organic acid monoglyceride and sodium caseinate, and
    (b) microcrystalline cellulose.

The homogenization can be performed using a general method. Examples of usable methods include treatment with a commercial homomixer or homogenizer. It is preferable to perform two-stage homogenization. For example, when two-stage homogenization is performed, the homogenization conditions may be 60 to 80°C, a first-stage pressure of $9.8 \times 10^6$ Pa (100 kgf/cm$^2$), and a second-stage pressure of $4.7 \times 10^6$ Pa (50 kgf/cm$^2$): a total pressure of $14.7 \times 10^6$ Pa (150 kgf/cm$^2$). The homogenization may be carried out multiple times.

Heat sterilization is generally performed after mixing all of the milk beverage raw materials, homogenizing the mixture, and pouring and hermetically sealing the mixture into a container. The method for heat sterilization is not limited, and a wide variety of heat sterilization methods applied to beverages can be used. Specific examples of usable methods include retort sterilization, heat sterilization using a plate or tubular heat exchanger, and UHT sterilization.

The heat sterilization conditions are also not limited. For example, when retort sterilization is employed, the conditions may be 110 to 140°C for 10 to 40 minutes, and specifically, 121°C for about 30 minutes. When heat sterilization is performed using a plate or tubular heat exchanger, the heat sterilization conditions may be 130°C for about 2 to about 5 seconds for products to be distributed at low temperatures, and 140°C for about 15 to 60 seconds for products to be distributed at ambient temperature, such as milk beverages packaged in PET bottles or cans (high-temperature short-time sterilization [HTST] or ultra-high-temperature short-time sterilization [UHT]).

In the milk beverage of the present invention, because of the above-mentioned emulsifiers (a) and/or (b) contained therein, coagulation and precipitation of oil and fat are significantly suppressed even when such heat sterilization treatment is performed, and in the milk beverage prepared through such treatment, coagulation and precipitation of oil and fat are significantly suppressed for a long period, and the plant sterol remains stably emulsified.

The above homogenization and heat sterilization steps can be carried out in the presence of a sucrose fatty acid ester in addition to the above-mentioned emulsifiers (a) and/or (b). The presence of a sucrose fatty acid ester makes it possible to significantly suppress undesirable coagulation and precipitation and to maintain emulsification stability for a long period, even when the milk beverage is distributed at ambient temperature or stored at a high temperature in a hot vending machine. The homogenization and heat sterilization can also be carried out in the presence of one or more polysaccharide thickeners selected from xanthan gum, native gellan gum, and carageenan, in addition to the emulsifier or in addition to the emulsifier and a sucrose fatty acid ester. The presence of such polysaccharide thickeners further improves the effect of the emulsifiers (a) and/or (b) in preventing coagulation and precipitation of oil and fat.

The amounts of emulsifier, sucrose fatty acid ester, and polysaccharide thickener to be used are as described above.

The plant sterol-containing milk beverage of the present invention thus prepared is poured into a container and hermetically sealed or enclosed therein, and then can be supplied as a product to the market. The container to be filled with the milk beverage is not limited as long as the milk beverage can be hermetically sealed or enclosed therein. Specific examples include cans, bottles, paper packs, PET bottles, laminate packs, and various other storage containers.

(3) Method for Emulsifying and Stabilizing Plant Sterol-Containing Milk Beverage

A plant sterol-containing milk beverage can be emulsified and stabilized by homogenizing and heat-sterilizing milk beverage raw materials including a plant sterol and a milk ingredient in the presence of at least one of the following emulsifiers (a) and (b):

  (a) a combination of an organic acid monoglyceride and sodium caseinate, and
  (b) microcrystalline cellulose.

The emulsification stabilization can also be performed by carrying out the homogenization and heat sterilization steps in the presence of a sucrose fatty acid ester in addition to the emulsifiers (a) or/and (b). The presence of a sucrose fatty acid ester makes it possible to significantly suppress undesirable coagulation and precipitation and to maintain emulsification stability for a long period, even when the milk beverage is distributed at ambient temperature or stored at a high temperature in a hot vending machine. The emulsification stabilization can also be carried out by performing the homogenization and heat sterilization steps in the presence of one or more polysaccharide thickeners selected from xanthan gum, native gellan gum, and carageenan, in addition to the emulsifiers or in the presence of the emulsifiers and a sucrose fatty acid ester. The presence of such polysaccharide thickeners further improves the effect of the emulsifiers in preventing coagulation and precipitation of oil and fat.

The amounts of emulsifier, sucrose fatty acid ester, and polysaccharide thickener to be used are as described above, and the homogenization and heat sterilization steps can also be performed by the methods described above.

EXAMPLES

The following Experimental Examples and Examples illustrate the present invention in more detail, but are not intended to limit the scope of the invention. In these examples, parts and percentages are by weight.

Experimental Example 1: Preparation of Plant Sterol-Containing Coffee-Milk Beverage

A plant sterol-containing coffee-milk beverage was prepared according to the formulation shown in Table 1. The plant sterol powder composition shown in Table 1 was a spray-dried composition consisting of 60% of a plant sterol (product name: Corowise, particle size: 25 $\mu$m, purity: 88%, produced by Cargill); 10% of a polyglycerol fatty acid ester (Sunsoft Q18S, HLB: 12.0, decaglycerol monostearate, produced by Taiyo Kagaku Co., Ltd.); and 30% of dextrin. The plant sterol contains $\beta$-sitosterol as the main component, and further contains campesterol, stigmasterol, brassicasterol, sitostanol, and campestanol.

Table 1

| Coffee-milk beverage formulation | % |
|---|---|
| Coffee beans with L value of 23 (solids content) | 1.05 |
| Powdered skim milk | 1.5 |
| Powdered whole milk | 0.5 |
| Sugar | 5.5 |
| Emulsifier | As shown in Table 2 |
| Plant sterol-containing powder composition | 1.0 |
| Sodium bicarbonate | 0.8 |
| Water to make total of: | 100 |

Table 2

| Emulsifier for coffee-milk beverage (%) | Succinic acid monoglyceride | Sodium caseinate | Sucrose fatty acid ester (HLB 16) | Sucrose fatty acid ester (HLB 5) | Native gellan gum |
|---|---|---|---|---|---|
| Example 1 | 0.02 | 0.18 | - | - | - |
| Example 2 | 0.02 | 0.18 | 0.03 | - | - |
| Example 3 | 0.02 | 0.18 | 0.03 | - | 0.01 |
| Comp.Ex.1 | - | 0.05 | 0.036 | 0.024 | - |
| Comp.Ex.2 | 0.02 | - | 0.03 | - | - |

(2) Preparation of Coffee-Milk Beverage

A. Extraction of Coffee Extract

A six-fold amount of boiling water was added to coarsely ground coffee beans for filtration and extraction, and the filtrate was cooled to 20°C to obtain a coffee extract. The Brix and pH were measured at 20°C. The amount of coffee extract to be added was determined according to the following formula.

$$\text{Amount to be added (\%)} = (\text{solids content/Brix}) \times 100$$

B. Preparation of Sugar Solution

Fifty parts of sugar was added to 50 parts of water, heated to 80°C, dissolved by stirring for 10 minutes, and cooled to obtain a sugar solution.

C. Preparation of Milk Solution

The plant sterol-containing powder composition, powdered skim milk, and powdered whole milk were added to an adequate amount of water, dissolved by stirring at 70°C for 10 minutes, and cooled to obtain a milk solution.

D. Preparation of Emulsifier Solution

The emulsifiers shown in Table 2 were added to an adequate amount of water, heated to 80°C, dissolved by stirring for 10 minutes, and cooled to obtain emulsifier solutions (Examples 1 to 3 and Comparative Examples 1 and 2).

E. Preparation of Coffee-Milk Beverage

The sugar solution and milk solution were admixed with each emulsifier solution to achieve the formulation shown in Table 1. A 10% sodium bicarbonate solution was further admixed, the coffee extract was added to the resulting mixture, and water was added to balance the total amount. Subsequently, the resulting mixture was heated to 70°C and then homogenized at a first-stage pressure of 9.8 x $10^6$ Pa (100 kgf/cm$^2$) and a second-stage pressure of 4.7 x $10^6$ Pa (50 kgf/cm$^2$). The homogenized mixture was poured into retort cans and cooled to room temperature. Thereafter, the coffee-milk beverage of Example 1 was UHT-sterilized at 140°C for 2 seconds, and the other coffee-milk beverages (Examples 2 and 3 and Comparative Examples 1 and 2) were retort-sterilized at 123°C for 20 minutes, to thereby obtain canned coffee-milk beverages.

(3) Evaluation

The cans containing the coffee-milk beverage of Example 1 were opened after the UHT sterilization and after one or two weeks of storage at 10°C, and the presence or absence and degree of a ring (white matter floating on the milk beverage) and precipitation were evaluated according to the criteria given below. The cans containing the other coffee-milk beverages (Examples 2 and 3 and Comparative Examples 1 and 2) were opened after the retort sterilization and after one or two weeks of storage at 60°C, and the presence or absence and degree of a ring and precipitation were evaluated. The milk beverages stored at 60°C were further stored at room temperature for half a day before the evaluation.

Evaluation Criteria

Table 3 shows the evaluation criteria for formation of a ring and precipitation.
Ring: The amounts of white matter floating on the beverages are indicated by +++ > ++ > + > ± > - in order from the largest.
Precipitation: The beverages were poured into plastic cups, and the amounts of solid particles (precipitation) in the last remaining portions of the beverages and on the bottom of the cans are indicated by +++ > ++ > + > ± > - in order from the largest.

Table 3

| Evaluation Grade | Evaluation |
|---|---|
| - | No ring or precipitation |
| ± | Extremely small amount of ring and/or precipitation |
| + | Small amount of ring and/or precipitation |
| ++ | Somewhat large amount of ring and/or precipitation |
| +++ | Extremely large amount of ring and/or precipitation |

(4) Results

Table 4 shows the results.

Table 4

| | After UHT sterilization | | After one week of storage at 10°C | | After two weeks of storage at 10°C | |
|---|---|---|---|---|---|---|
| | Ring | Precipitation | Ring | Precipitation | Ring | Precipitation |
| Ex.1 | - | - | - | - | ± | ± |
| | After retort sterilization | | After one week of storage at 60°C | | After two weeks of storage at 60°C | |
| | Ring | Precipitation | Ring | Precipitation | Ring | Precipitation |
| Ex.2 | - | - | - | - | ± | + |
| Ex.3 | - | - | - | - | - | ± |
| Comp.Ex.1 | - | +++ | - | +++ | - | +++ |
| Comp.Ex.2 | - | - | - | ++ | - | +++ |

As shown in Table 4, in the coffee-milk beverages containing an organic acid monoglyceride (succinic acid monoglyceride) and sodium caseinate (Examples 1 to 3), the plant sterol was stably dispersed, and the formation of rings and precipitation was significantly suppressed even though the beverages were heat-sterilized. Further, in the coffee-milk beverage of Example 2, which contained a sucrose fatty acid ester in addition to an organic acid monoglyceride (succinic acid monoglyceride) and sodium caseinate, and in the coffee-milk beverage of Example 3, which contained a sucrose fatty acid ester and native gellan gum in addition to an organic acid monoglyceride (succinic acid monoglyceride) and sodium caseinate, the formation of rings and precipitation was significantly suppressed even though the beverages were retort-sterilized and stored at 60°C: The beverages had excellent emulsification stability.

Experimental Example 2: Preparation of Café Au Lait

(1) Formulation

Plant sterol-containing café au lait was prepared according to the formulation shown in Table 5. The plant sterol powder composition was the same as that used in Experimental Example 1.

Table 5

| Café au lait Formulation | % |
|---|---|
| Coffee beans with L value of 18 (solids content) | 0.75 |
| Cow's milk | 20.0 |
| Sugar | 6.0 |
| Emulsifier | As shown in Table 6 |
| Plant sterol-containing powder composition | 1.0 |
| Sodium bicarbonate | 0.8 |
| The balance of water to make a total of: | 100 |

Table 6

| Emulsifier for café au lait | Succinic acid monoglyceride | Sodium caseinate | Sucrose fatty acid ester (HLB 16) | Sucrose fatty acid ester (HLB 5) |
|---|---|---|---|---|
| Ex.4 | 0.02 | 0.18 | - | - |
| Ex.5 | 0.02 | 0.18 | 0.06 | - |
| Comp.Ex.3 | - | 0.05 | 0.072 | 0.048 |
| Comp.Ex.4 | 0.02 | - | 0.06 | - |

(2) Preparation of Café Au Lait

A. Extraction of Coffee Extract

Coffee extract was extracted in the same manner as in the preparation of the coffee-milk beverage in Experimental Example 1.

B. Preparation of Café Au Lait

According to the formulation shown in Table 5, sugar, cow's milk, the plant sterol powder composition, and the emulsifiers shown in Table 6 were added to water, heated to 80°C, dissolved by stirring for 10 minutes, and cooled to room temperature. Thereafter, a 10% sodium bicarbonate solution was further admixed, the coffee extract was added to the resulting mixture, and water was added to balance the total amount. The obtained mixture was heated to 70°C and homogenized at a first-stage pressure of $9.8 \times 10^6$ Pa (100 kgf/cm$^2$) and a second-stage pressure of $4.7 \times 10^6$Pa (50 kgf/cm$^2$). After the homogenization, the obtained café au lait was poured into retort cans and cooled to room temperature. Thereafter, the café au lait of Example 4 was UHT-sterilized at 140°C for 2 seconds, and the café au laits of Example 5 and Comparative Examples 3 and 4 were retort-sterilized at 123°C for 20 minutes, to obtain canned café au lait beverages.

(3) Evaluation

The cans containing the café au lait beverage of Example 4 were opened after the UHT sterilization and after one or two weeks of storage at 10°C, and the presence or absence and degree of a ring (white matter floating on the beverage) and precipitation were evaluated in the same manner as in Experimental Example 1. The cans containing the other café au lait beverages (Example 5 and Comparative Examples 3 and 4) were opened after retort sterilization and after one or two weeks of storage at 60°C, and the presence or absence and degree of a ring and precipitation were evaluated. Further, each beverage was observed to evaluate the deposition and floating of the sterol after one and two weeks of storage, in addition to the evaluation items in Experimental Example 1. The amounts of deposition and floating matter are indicated by +++ > ++ > + > ± > - in order from the largest.

(4) Results

Table 7 shows the results.

Table 7

|  | After UTH sterilization | | After one week of storage at 10°C | | | After two weeks of storage at 10°C | | |
|---|---|---|---|---|---|---|---|---|
|  | Ring | Precipitation | Ring | Precipitation | Deposition | Ring | Precipitation | Deposition |
| Ex.4 | - | - | - | - | - | - | - | - |
|  | After retort sterilization | | After one week of storage at 60°C | | | After two weeks of storage at 60°C | | |
|  | Ring | Precipitation | Ring | Precipitation | Deposition | Ring | Precipitation | Deposition |
| Ex.5 | - | - | - | - | - | ± | - | - |
| Comp.Ex.3 | - | +++ | - | ++ | ++ | - | +++ | +++ |
| Comp.Ex.4 | - | - | - | + | + | + | ++ | ++ |

As shown in Table 7, in the café au lait beverages containing an organic acid monoglyceride (succinic acid monoglyceride) and sodium caseinate (Examples 4 and 5), the plant sterol was stably dispersed, and the formation of rings and precipitation was significantly suppressed even though the beverages were sterilized and stored for a long period. Further, in the café au lait beverage of Example 5, which contained a sucrose fatty acid ester in addition to an organic acid monoglyceride (succinic acid monoglyceride) and sodium caseinate, no formation of rings or precipitation, or deposition or floating of the plant sterol, was observed even after retort sterilization followed by storage at 60°C: The beverage had excellent emulsification stability.

Experimental Example 3: Preparation of Coffee-milk Beverage (1) Formulation

Coffee-milk beverages were prepared according to the formulation shown in Table 8. San Sterol (trademark) ES produced by San-Ei Gen F.F.I., Inc. was used as the plant sterol ester. The plant sterol ester contained β-sitosterol, campesterol, stigmasterol, brassicasterol, sitostanol, and campestanol.

Table 8

| Coffee-milk beverage formulation | % |
|---|---|
| Coffee beans with L value of 20 (solids content) | 1.25 |
| Powdered skim milk | 1.25 |
| Powdered whole milk | 0.5 |
| Emulsifier | As shown in Table 9 |
| Plant sterol ester | 1.44 |
| 50% sugar solution | 3 |
| Sucralose | 0.0004 |
| 10% Sodium bicarbonate solution | 1 |
| The balance of water to make a total of: | 100 |

Table 9

| Emulsifier | Ex. 6 | Ex. 7 | Ex. 8 |
|---|---|---|---|
| Sucrose fatty acid ester (HLB 16) | 0.05 | 0.316 | 0.316 |
| Succinic acid monoglyceride | --- | 0.02 | 0.02 |
| Sodium caseinate | --- | 0.18 | 0.18 |
| Microcrystalline cellulose | 0.316 | 0.316 | 0.316 |
| Sodium carboxymethylcellulose | 0.004 | 0.004 | 0.004 |
| Xanthan gum | 0.0055 | 0.0055 | 0.0055 |
| Carageenan | 0.035 | 0.035 | 0.035 |
| Sorbitan fatty acid ester (HLB 6) | --- | --- | 0.05 |

(2) Preparation of Coffee-Milk Beverage

A. Extraction of Coffee Extract

A six-fold amount of hot water at 95°C was added to coarsely ground coffee beans with an L value of 20, followed by filtration. After 10 minutes, the above coffee beans were added to the resulting coffee extract, and the resulting mixture was filtered. The filtrate was then cooled to 20°C to obtain coffee extract. The Brix was measured at 20°C, and calculation was performed according to the following formula:

$$\text{Amount to be Added} = (\text{Solids Content}/\text{Brix}) \times 100.$$

B. Preparation of Coffee-Milk Beverage

According to the formulation shown in Table 8, powdered skim milk, powdered whole milk, emulsifiers, and the plant sterol ester were added to water, heated to 80°C, dissolved by stirring for 10 minutes, and cooled to 20°C. Thereafter, the sugar solution, sucralose, 10% sodium bicarbonate solution, and coffee extract were added, the resulting mixture was heated to 70°C, and water was added to balance the total amount. The obtained mixture was homogenized at a first step pressure of 9.8 x $10^6$ Pa (100 kgf/cm$^2$) and a second step pressure of 4.7 x $10^6$ Pa (50 kgf/cm$^2$). After homogenization, the mixture was poured into retort cans, cooled to room temperature, and then retort-sterilized at 123°C for 20 minutes to prepare canned coffee-milk beverages (Examples 6 to 8).

(3) Evaluation

The cans containing the coffee-milk beverages (Examples 6 to 8) were opened after one week of storage at 60°C, after one week of storage at 37°C, and after six weeks of storage at 37°C, and the presence or absence of a ring, precipitation, and white floating matter was observed. The amounts of rings, precipitation or floating matter were indicated by +++ > ++ > + > $\pm$ > - in order from the largest.

(4) Results

Table 10 shows the results.

Table 10

| | After one week of storage at 60°C | | | After one week of storage at 37°C | | | After six weeks of storage at 37°C | | |
|---|---|---|---|---|---|---|---|---|---|
| | Ring | Precipitation | White floating matter | Ring | Precipitation | White floating matter | Ring | Precipitation | White floating matter |
| Ex.6 | - | - | - | - | - | - | $\pm$ | - | - |
| Ex.7 | - | - | - | - | - | - | - | - | - |
| Ex.8 | - | - | - | - | - | - | - | - | - |

As shown in Table 10, the use of microcrystalline cellulose makes it possible for the plant sterol ester to remain emulsified stably for a long period (Example 6). Further, when an organic acid monoglyceride (succinic acid monoglyceride) and sodium caseinate are used in addition to microcrystalline cellulose, no deposition or floating of the plant sterol was observed, indicating further improvement of the emulsification stabilizing effect.

INDUSTRIAL APPLICABILITY

A plant sterol can be kept emulsified stably in a milk beverage even during heat sterilization treatment and storage, making it possible to produce a plant sterol-containing milk beverage with excellent quality retention and stability. The method of the present invention is also advantageous in that it can be carried out according to an ordinary production method for a milk beverage without the need for special operations.

**Claims**

1. A milk beverage comprising a plant sterol, a milk ingredient, and at least one of (a) and (b):

    (a) an organic acid monoglyceride and sodium caseinate, and
    (b) microcrystalline cellulose.

2. The milk beverage according to claim 1, wherein the plant sterol is one or more members selected from the group consisting of β-sitosterol, campesterol, stigmasterol, brassicasterol, sitostanol, campestanol, and ester salts thereof.

3. The milk beverage according to claim 1, wherein the organic acid monoglyceride is one or more members selected from the group consisting of succinic acid monoglyceride, citric acid monoglyceride, diacetyl tartaric acid monoglyceride, acetic acid monoglyceride, and lactic acid monoglyceride.

4. The milk beverage according to claim 1, which further comprises at least one member selected from the group consisting of sucrose fatty acid esters, xanthan gum, native gellan gum, and carageenan.

5. The milk beverage according to claim 1, wherein the milk ingredient is contained in a proportion of 0.8 to 5 wt.% on a nonfat milk solids basis.

6. A method for producing a milk beverage, comprising the steps of homogenizing and heat-sterilizing milk beverage raw materials including a plant sterol and a milk ingredient in the presence of at least one of the following emulsifiers (a) and (b) :

   (a) an organic acid monoglyceride and sodium caseinate, and
   (b) microcrystalline cellulose.

7. The method according to claim 6, wherein the plant sterol is one or more members selected from the group consisting of β-sitosterol, campesterol, stigmasterol, brassicasterol, sitostanol, campestanol, and ester salts thereof.

8. The method according to claim 6, wherein the organic acid monoglyceride is one or more members selected from the group consisting of succinic acid monoglyceride, citric acid monoglyceride, diacetyl tartaric acid monoglyceride, acetic acid monoglyceride, and lactic acid monoglyceride.

9. The method according to claim 6, wherein the homogenization and heat sterilization are performed in the presence of at least one member selected from the group consisting of sucrose fatty acid esters, xanthan gum, native gellan gum, and carageenan, in addition to the emulsifier.

10. The method according to claim 6, wherein the proportion of the milk ingredient in the milk beverage raw materials is 0.8 to 5 wt.% on a nonfat milk solids basis.

11. A method for emulsifying and stabilizing a plant sterol-containing milk beverage, comprising the steps of homogenizing and heat-sterilizing milk beverage raw materials including a plant sterol and a milk ingredient in the presence of at least one of the following emulsifiers (a) and (b):

    (a) an organic acid monoglyceride and sodium caseinate, and
    (b) microcrystalline cellulose.

12. The method according to claim 11, wherein the plant sterol is one or more members selected from the group consisting of β-sitosterol, campesterol, stigmasterol, brassicasterol, sitostanol, campestanol, and ester salts thereof.

13. The method according to claim 11, wherein the organic acid monoglyceride is one or more members selected from the group consisting of succinic acid monoglyceride, citric acid monoglyceride, diacetyl tartaric acid monoglyceride, acetic acid monoglyceride, and lactic acid monoglyceride.

14. The method according to claim 11, wherein the homogenization and heat sterilization are performed in the presence of at least one member selected from the group consisting of sucrose fatty acid esters, xanthan gum, native gellan gum, and carageenan, in addition to the emulsifier.

15. The method according to claim 11, wherein the proportion of the milk ingredient in the milk beverage raw materials is 0.8 to 5 wt.% on a nonfat milk solids basis.

16. Use of at least one of the following emulsifiers

    (a) and (b) in production of an emulsified and stabilized milk beverage comprising a plant sterol and a milk ingredient:
    (a) an organic acid monoglyceride and sodium caseinate, and
    (b) microcrystalline cellulose.

17. Use of at least one of the following emulsifiers

    (a) and (b) for emulsifying and stabilizing a milk beverage comprising a plant sterol and a milk ingredient:
    (a) an organic acid monoglyceride and sodium caseinate, and
    (b) microcrystalline cellulose.

**EP 2 002 726 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11146757 A
- JP 2002112747 A
- JP 2002291442 A
- JP 2002505093 A
- JP 2005269941 A
- JP 3535147 B
- JP 196514174 B
- JP 6335365 A